# EUROPEAN PATENT SPECIFICATION

(11) **EP 2 424 008 B1**
(45) Date of publication and mention of the grant of the patent: **11.03.2015**
(21) Application number: 11250449.3
(22) Date of filing: 08.04.2011
(51) Int. Cl.: H01M 2/22, H01M 2/26, H01M 2/30, H01M 10/04, H01M 2/00, H01M 10/02, H01M 2/02

(54) **Rechargeable battery**
Wiederaufladbare Batterie
Batterie rechargeable

(30) Priority: 31.08.2010 KR 20100084838; 14.09.2010 KR 20100090063
(43) Date of publication of application: 29.02.2012
(73) Proprietor: Samsung SDI Co., Ltd., Gyeonggi-do (KR); Robert Bosch GmbH, 70442 Stuttgart (DE)
(72) Inventor: Kim, Sung-Bae, Gyeonggi-do (KR); Byun, Song-Won, Yongin-si Gyeonggi-do (KR)
(74) Representative: Mounteney, Simon James

(56) References cited:
- EP-A1- 2 346 110
- WO-A1-2010/095224
- US-A1- 2010 047 686
- US-A1- 2010 167 107
- US-A1- 2010 227 212

## Description

### BACKGROUND

### 1. Field

Embodiments relate to a rechargeable battery.

### 2. Description of the Related Art

Rechargeable batteries may be repeatedly charged and discharged, unlike primary batteries, which cannot be repeatedly charged. Low-capacity rechargeable batteries may be used for portable compact electronic apparatuses, e.g., mobile phones, notebook computers, and/or camcorders. High-capacity rechargeable batteries may be used as a power source for, e.g., driving a motor of a hybrid vehicle, etc. or high-capacity storage devices.

Recently, a high-output rechargeable battery using a non-aqueous electrolytic solution having high energy density has been developed. The high-output rechargeable battery may be configured as a high-capacity battery module by connecting a plurality of rechargeable batteries in series so as to be used for driving a motor for an apparatus requiring a large power, e.g., an electrical vehicle, etc. The rechargeable battery may have, e.g., a cylindrical shape, an angular shape, and the like.

EP2346110 discloses a rechargeable battery with a current collecting lead tab and can be installed and stably fixed with electrode assemblies. US2010/047686 discloses an electrode structure for connecting a battery module to a bus bar and a method of manufacturing a battery device to which the bus bar is connected. WO2010/095224 discloses a battery wherein the resistance of the electode terminal member does not increase easily even after long term use. US2010/0167107 and US2010/0227212 also disclose rechargeable batteries.

The above information disclosed in this Background section is only for enhancement of understanding of the background of the described technology and therefore it may contain information that does not form the prior art that is already known in this country to a person of ordinary skill in the art.

### SUMMARY

At least one of the above and other features and advantages may be realized by providing a rechargeable battery including a plurality of electrode assemblies; a case accommodating the plurality of electrode assemblies, the case having an opening; a cap assembly including a cap plate coupled to the opening to seal the case; one or more electrode terminals electrically connected to the electrode assemblies; and a lower insulating member adjacent one or more electrode terminals and installed in the case, wherein the lower insulating member includes a first portion adjacent an electrode terminal, the first portion having a first width in a direction parallel to the cap plate and being fixed to the electrode terminal,, and a second portion extending from one end of the first portion, the second portion having a second width in the direction parallel to the cap plate and perpendicular to the direction of extension of the first portion, and a width-direction end of the second portion lies in a plane between an inner surface of the case and a center of a top surface of an outermost electrode assembly among the electrode assemblies, the top surface facing the second portion, wherein the second width of the second portion is larger than the first width.

The top surface of the electrode assembly facing the second portion of the lower insulating member may include a curved portion.

The second width of the second portion may be about equal to a width of the cap plate.

For example, the second width of the second portion may be 75% to 100% of the width of the cap plate.

The second width of the second portion is larger than the first width,

The second portion may include an edge facing the electrode assembly, the edge including an inclined surface.

The inclined surface of the edge of the second portion may be a roundad-inclined surface.

The inclined surface of the edge of the second portion may be a flat-inclined surface.

The lower insulating member may include a first fixation protrusion on a surface of the first portion, the first fixation protrusion facing the cap assembly; and a second fixation protrusion on a surface of the second portion, the second fixation protrusion facing the cap assembly.

The rechargeable battery may further include a protection member covering a portion of an outside of the electrode assembly, the portion of the outside of the electrode assembly corresponding to the lower insulating member.

The protection member may be a tape covering the outside of the electrode assembly.

The lower insulating member may be made of an elastic material.

The one or more electrode terminals may be electrically connected to the electrode assemblies through an electrode current collecting member.

The electrode current collecting member may include a terminal junction portion, the terminal junction portion being electrically connected to the one or more electrode terminals.

The electrode current collecting member may include at least one tab branch, the at least one tab branch being electrically connected to at least one of the plurality of electrode assemblies and the terminal junction portion.

### BRIEF DESCRIPTION OF THE DRAWINGS

The above and other features and advantages will become more apparent to those of ordinary skill in the art by describing in detail exemplary embodiments with reference to the attached drawings, in which:
FIG. 1 illustrates a perspective view of a rechargeable battery according to an embodiment.
FIG. 2 illustrates a cross-sectional view taken along line II-II of FIG. 1.
FIG. 3 illustrates a partial exploded perspective view of the rechargeable battery of FIG. 1.
FIG. 4 illustrates a cross-sectional view taken along line IV-IV of FIG. 3.
FIG. 5 illustrates a cross-sectional view taken along line V-V of FIG. 2.
FIG. 6 illustrates a cross-sectional view of a modified example of the rechargeable battery of FIG. 1.
FIG. 7 illustrates a partial exploded perspective view of a rechargeable battery according to another embodiment.
FIG. 8 illustrates a cross-sectional view taken along line VIII-VIII of FIG. 7.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

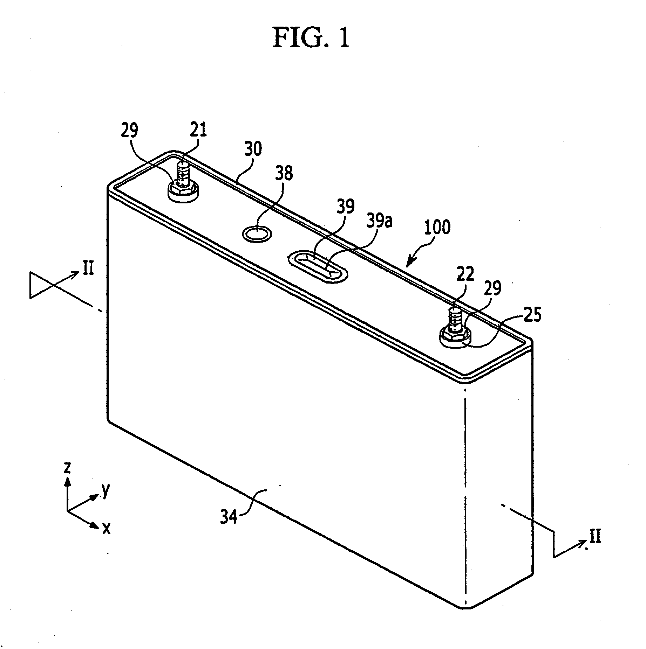

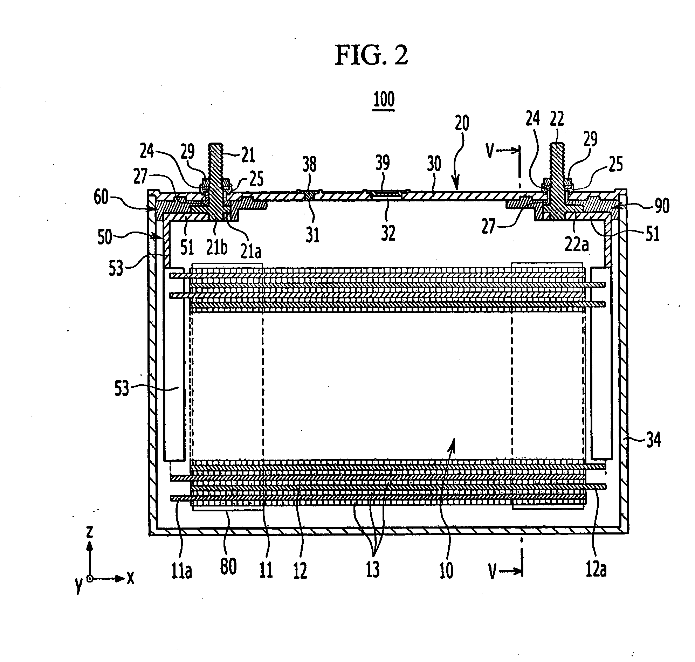

FIG. 1 illustrates a perspective view of a rechargeable battery according to an embodiment. FIG. 2 illustrates a cross-sectional view taken along line 11-11 of FIG. 1.

Referring to FIGS. 1 and 2, the rechargeable battery 100 according to the present embodiment may include a plurality of electrode assemblies 10 including a winding of a separator 13 interposed between a first electrode 11 and a second electrode 12, a case 34, a cap plate 30 with a discharge hole 32, a vent plate 39 coupled to one end of the discharge hole 32, and lower insulating members 60 and 90 installed in the case 34.

In this embodiment, the rechargeable battery 100 may be a lithium ion rechargeable battery and has an angular shape. However, embodiments of the invention are not limited thereto and may be applied to other types of batteries, e.g., a lithium polymer battery, and the like. In this embodiment, the first electrode 11 may be a negative electrode; and the second electrode 12 may be a positive electrode. In other embodiments, however, the first electrode 11 may be the positive electrode; and the second electrode 12 may be the negative electrode. Here, for better comprehension and ease of description, the first electrode 11 and the second electrode 12 will be described instead of the negative electrode and the positive electrode.

In the rechargeable battery 100 according to the present embodiment, the electrode assembly 10 has a jelly roll shape formed by winding the first electrode 11, the second electrode 12, and the separator 13 together. The first electrode 11 and the second electrode 12 include current collectors that are each formed of a thin-film metal foil with an active material coated on a surface of each current collector. The first electrode 11 and the second electrode 12 include a coated region where the current collector is coated with the active material and uncoated regions 11 a and 12a where the current collector is not coated with the active material. The coated region occupies most of the first electrode 11 and the second electrode 12 in the electrode assembly 10 and the uncoated regions 11 a and 12a is disposed at sides of the coated region in a jelly roll state.

However, embodiments of the invention are not limited thereto; and the electrode assembly 10 may have a structure in which the first electrode 11 and the second electrode 12 include a plurality of sheets stacked with the separator 13 interposed therebetween.

The case 34 of the present embodiment has a substantially rectangular parallelepiped shape and has an opening on one surface or end thereof. The cap assembly 20 includes a cap plate 30 covering the opening of the case 34, a first electrode terminal 21 protruding outwardly from the cap plate 30 and electrically connected with the first electrode 11, a second electrode terminal 22 protruding outwardly from the cap plate 30 and electrically connected with the second electrode 12, and a vent plate 39 with a notch 39a configured to open in response to a predetermined internal pressure. In other embodiments of the invention, alternative case shapes could be used.

In this embodiment, the cap plate 30 is formed of a thin plate material and is coupled to the opening of the case 34 to seal the opening. The cap plate 30 blocks an inside of the sealed case 34 from an outside thereof. Further, the cap plate 30 connects the inside and the outside of the sealed case to each other. For example, as shown in this embodiment, the cap plate 30 may have an electrolytic solution inlet 31 for injecting an electrolytic solution into the sealed case 34. The electrolytic solution inlet 31 may be sealed by a sealing plug 38 after the electrolytic solution is injected. In other embodiments of the invention, alternative cap plate arrangements could be used.

The terminals 21 and 22 pass through (i.e. penetrate) the cap plate 30 in this embodiment. For example, a first gasket 25 positioned in an upper part and a second gasket 27 positioned in a lower part between the cap plate 30 and the terminals 21 and 22 may insulate the cap plate 30 and the terminals 21 and 22 from each other. The terminals 21 and 22 include the first electrode terminal 21 and the second electrode terminal 22.

The terminals 21 and 22 have a cylindrical shape in this embodiment. Nuts 29 supporting the terminals 21 and 22 on the top are installed at the terminals 21 and 22; and threads are formed on outer peripheries of the terminals 21 and 22 so that the nuts 29 are fastened to the terminals 21 and 22. Terminal flanges 21 a and 22a supporting the terminals on the bottom are formed on the bottoms of the terminals 21 and 22. When the nuts 29 are fastened to the terminals 21 and 22, the terminal flanges 21 a and 22a and the nuts 29 may press the first gasket 25 and the second gasket 27 to seal a space between the terminals 21 and 22 and the cap plate 30. Washers 24 for absorbing the fastening force of the nuts 29 are installed below the nut 29.

In other embodiments, the terminals 21 and 22 may not be cylindrical, but may instead be flat panel type terminals (not shown) coupled by terminals plates and rivets or other suitable coupling arrangements.

In this embodiment, the lower insulating member 60 is positioned adjacent to the cap plate 30 in the case 34. The first electrode terminal 21 penetrates the lower insulating member 60 in this embodiment. In other words, in this embodiment, the first electrode terminal 21 passes through the lower insulating member 60. In other embodiments, the first electrode terminal 21 may pass adjacent the lower insulating member 60.

Furthermore, in this embodiment, a protection member 80 covering a portion of an outside of the electrode assembly 10 corresponding to the lower insulating member 60 surrounds the electrode assembly 10. In some embodiments, the protection member 80 covers a portion of an outside of the electrode assembly 10 that is adjacent the lower insulating member 60. In some embodiments, the protection member 80 may be a tape that covers the electrode assembly 10. Accordingly, even if the electrode assembly 10 is deformed due to, e.g., external impact, and the like, damage to the electrode assembly 10 may be prevented. In some embodiments, the tape may be made of an insulating material.

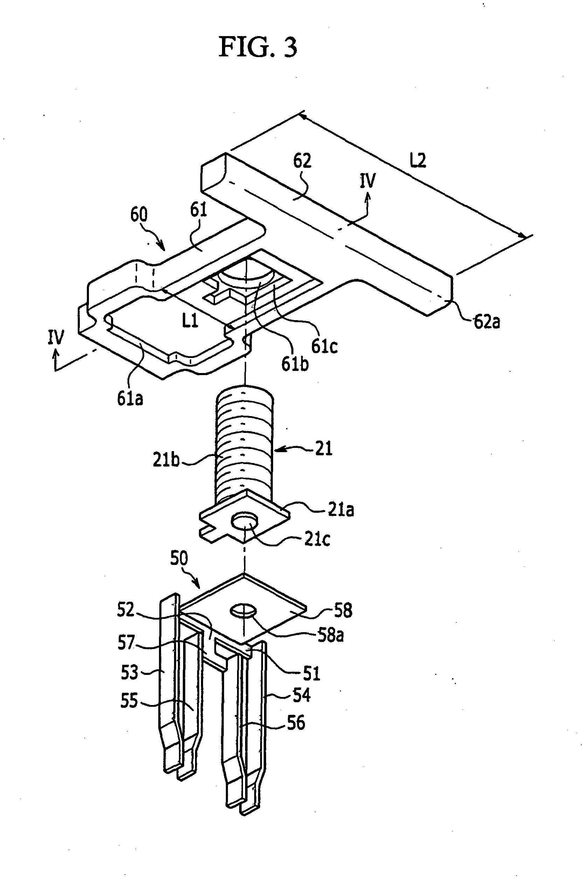

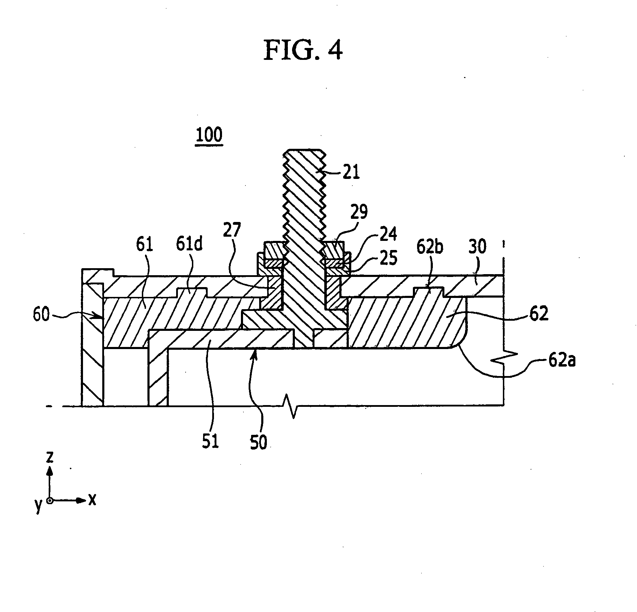

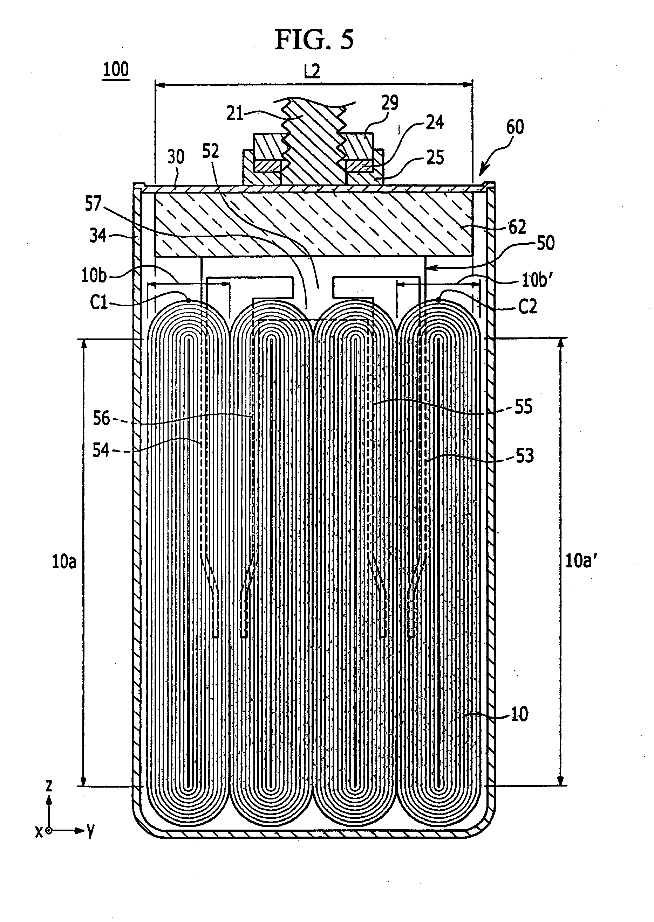

FIG. 3 illustrates a partial exploded perspective view of the rechargeable battery 100 of FIG. 1. FIG. 4 illustrates a cross-sectional view taken along line IV-IV of FIG. 3. FIG. 5 illustrates a cross-sectional view taken along line V-V of FIG. 2. Referring to FIGS. 3, 4, and 5, the rechargeable battery 100 according to an embodiment will be described in more detail.

In some embodiments, the rechargeable battery 100 may include a plurality of electrode assemblies, e.g., four electrode assemblies 10, and the four, electrode assemblies 10 may be stacked and arranged in parallel. Herein, an embodiment will be described as including four stacked electrode assemblies 10.

As shown in FIG. 3, the first electrode terminal 21 includes a terminal pole 21 b protruding from a terminal flange 21 a. The first electrode terminal 21 includes the outer peripheral surface that is thread-processed as well as a supporting protrusion 21 c that protrudes toward a bottom of the case 34 from a bottom of the terminal flange 21 a.

A first electrode current collecting member 50 includes a terminal junction portion 58 with a support hole 58a into which the supporting protrusion 21c of the first electrode terminal 21 is inserted as well as a plurality of branches 53, 54, 55, and 56 that extend below the terminal junction portion 58 and are inserted between the electrode assemblies 10. The terminal junction portion 58 has a plate shape substantially parallel to the cap plate 30. A first basin portion 51 protruding outwardly further than a side end of the terminal junction portion 58 and bent toward a bottom of the terminal junction portion 58 is below the terminal junction portion 58 in this embodiment.

A first tab branch 53 and a second tab branch 54 is bent on ends of the first basin portion 51 and extends toward a bottom of case 34.

The first electrode current collecting member 50 includes connection plate 52 that extends downwardly toward the bottom of the case 34 from a center of the first basin portion 51. A second basin portion 57 protruding outwardly further than the side end of the connection plate 52 is below the connection plate 52. The first electrode current collecting member 50 includes a third tab branch 55 and a fourth tab branch 56 bent toward a center of the electrode assembly 10 at side ends of the second basin portion 57 and extending toward the bottom of the case 34 from the second basin portion 57.

In this embodiment, the connection plate 52 is located between the first tab branch 53 and the second tab branch 54. Accordingly, the third tab branch 55 and the fourth tab branch 56 is located between the first tab branch 53 and the second tab branch 54.

As a result, the uncoated regions having a thickness smaller than the coated region where the active material is coated is formed on ends of each of the, e.g., four electrode assemblies 10 that are overlapped with or stacked against each other. Thus, a separated space is formed between the first electrode uncoated regions 11a; and the tab branches 53, 54, 55, and 56 may be inserted into the space.

A shape of the first electrode current collecting member 50 is described as one example and may be changed as long as it is capable of performing a current collecting function. Therefore, embodiments of the invention are not limited to the described examples.

The lower insulating member 60 includes a first portion 61 through which the first electrode terminal 21 passes through, and a second portion 62 extending from the first portion 61. In some embodiments, the first portion 61 may be fixed to the first electrode terminal 21. In this embodiment, the first portion 61 is located between sidewalls of the case 34 and the first electrode terminal 21. The second portion is located between the first electrode terminal 21 and a central region of the case 34, i.e., away from the sidewalls of the case 34. In some embodiments, the lower insulating member 60 may be made of an insulating material and/or may be made of an elastic material. In other words, in some embodiments, the lower insulating member 60 may comprise an insulating material and/or an elastic material.

In the present embodiment, a structure of the lower insulating member 60 fixed to the first electrode terminal 21 is the same as that of the lower insulating member 90 fixed to the second electrode terminal 22. Thus, a repeated description of the lower insulating member 90 fixed to the second electrode terminal 22 will be omitted. In other embodiments, the lower insulating member 60 may have a different structure when compared to the lower insulating member 90. In addition, in some embodiments, the lower insulating member can extend so that the first electrode terminal 21 and the second electrode terminal 22 both pass therethrough.

The first portion 61 of the lower insulating member 60 has a first width L1 in a direction parallel to a surface of the cap plate 30. Further, as shown in FIG. 3, the first portion 61 includes a terminal hole 61 b and a flange groove 61 c at one portion thereof, e.g., corresponding to the terminal hole 21 b, and a junction groove 61 a on a surface of the lower insulating member 60 facing the first current collecting member 50 and the case 34.

For example, when the first electrode terminal 21 is inserted into the terminal hole 61 b, the terminal flange 21 a may be fixed to the flange groove 61 c. Thus, when the first basin portion 51 of the first electrode current collecting member 50 is inserted into the junction groove 61 a, the supporting protrusion 21 c may be inserted into the support hole 58a and joined, e.g., welded.

Accordingly, the first portion 61 of the lower insulating member 60 may insulate the cap plate 30 and the first electrode current collecting member 50 from each other and may stably fix a position of the lower insulating member 60, e.g., in the case 34.

As illustrated in FIG. 4, a first fixation protrusion 61 d is on a surface of the first portion 61 that faces the cap plate 30. Accordingly, the first fixation protrusion 61d is coupled to a fixation groove in the cap plate 30 to prevent the lower insulating member 60 from being rotated.

A second portion 62 of the lower insulating member 60 extends from a side of the lower insulating member 60, e.g., away from the first electrode terminal 21 and the sidewalls of the case 34, as shown in FIG. 3.

The second portion 62 of the lower insulating member 60 has a second width L2 in a direction parallel to the cap plate 30. As illustrated in FIG. 4, a second fixation protrusion 62b is on a surface of the second portion 62 facing the cap plate 30 and is coupled to a fixation groove in the cap plate 30 to prevent the lower insulating member 60 from being rotated.

Referring to FIG. 5, the second portion 62 has the second width L2. Thus, width-direction ends of the second portion 62 lie in a plane between an inner surface of the case 34 and centers C1 and C2 of top surfaces of outermost electrode assemblies 10 of the stack, e.g., surfaces facing the second portion 62.

In this embodiment, the width-direction ends of the second portion 62 lie in a plane between side surfaces 10a and 10'a of the outermost electrode assemblies 10 and the centers C1 and C2 of curved, e.g., top, surfaces 10b and 10'b of the outermost electrode assemblies 10.

In other embodiments, the width-direction end of a second portion 62 can lie in a plane between an inner surface of the case and a centre of a top surface of an outermost electrode assembly among the electrode assemblies. Hence, if two second portions are present (e.g. on respective lower insulating members 60, 90), each second portion can lie in a plane between a respective inner surface of the case and the top surface of a respective outermost electrode assembly among the electrode assemblies.

In some embodiments, the second width L2 may be about equal to a width of the cap plate 30. For example, the second width L2 may be 75% to 100% of the width of the cap plate 30. The second width L2 of the second portion 62 is larger than the first width L1 of the first portion 61.

Referring back to FIGS. 3 and 4, an edge of a surface of the second portion 62 facing the electrode assembly 10 may include an inclined surface, as shown in this embodiment. In some embodiments, as illustrated in FIG. 4, the inclined surface of the edge of the surface of the second portion 62 may include a rounded-inclined surface 62a. In other embodiments, the inclined surface of the edge of the surface of the second portion 62 may include a flat-inclined surface. In other embodiments, the edge of the surface of the second portion 62 is not inclined.

The second portion 62 may contact all of, e.g., all four of, the stacked electrode assemblies 10 during a test (e.g., a drop test) for measuring durability of the rechargeable battery 100 and/or when the electrode assembly 10 is expanded by gas generated from the inside thereof due to charging/recharging. Accordingly, deformation of the electrode assembly 10 may be minimized by reducing stress applied to each individual electrode assembly 10. In addition, even if the electrode assembly 10 were to contact the round-inclined surface 62a of the second portion 62, damage to the electrode assembly 10 may be prevented.

The second portion 62 may have an insulation function to prevent current flow between the cap plate 30 and the electrode assembly 10, and may prevent the electrode assembly 10 from being deformed by absorbing external impact applied to the electrode assembly 10 at a part thereof corresponding to the second portion 62.

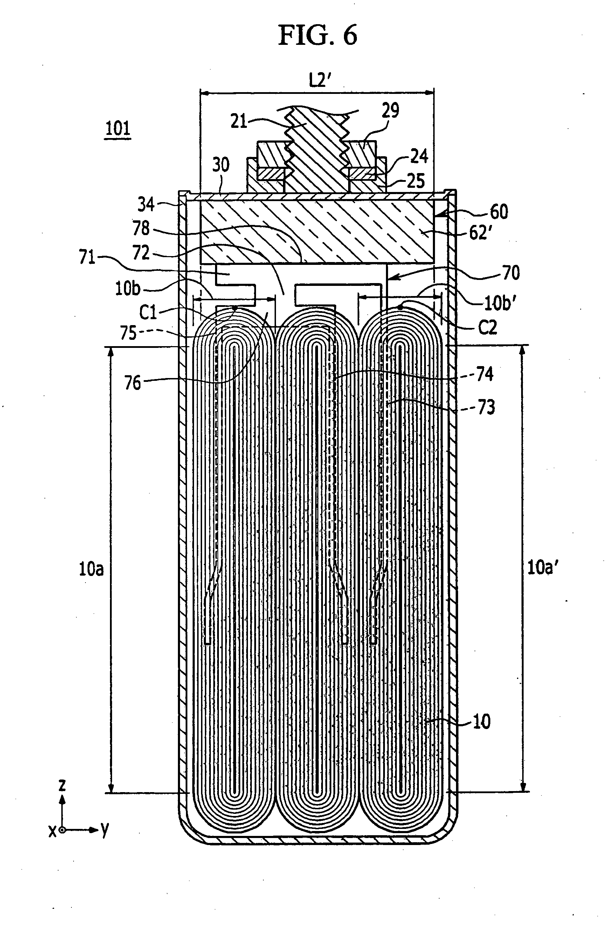

FIG. 6 illustrates a cross-sectional view of a modified example of the rechargeable battery of FIG. 1.

Referring to FIG. 6, the rechargeable battery 101 according to the present modified example has the same structure as the rechargeable battery 100 of FIG. 1 except for a first electrode current collecting member 70. Therefore, a repeated description of the same structure will be omitted.

Referring to FIG. 6, the current collecting member 70 according to the present example includes a terminal junction portion 78 attached to a terminal by welding and a plurality of tab branches 73, 74, and 75 that extend below the terminal junction portion 78 and are inserted between the electrode assemblies 10.

The rechargeable battery 101 according to the present example includes a plurality of electrode assemblies, e.g., three electrode assemblies 10 and the three electrode assemblies 10 may be stacked and arranged in parallel.

The terminal junction portion 78 is parallel to the cap plate 30 and fixed, e.g., welded to a bottom of the terminal. The tab branches 73, 74, and 75 include a first tab branch 73, a second tab branch 74, and a third tab branch 75, the three tab branches 73, 74, and 75 being arranged in parallel to one another. A first basin portion 71 protruding outwardly further than a side end of the terminal junction portion 78 is located below the terminal junction portion 78. Accordingly, the first basin portion 71 is bent toward the bottom of the case 34 from the terminal junction portion 78.

The first tab branch 73 is bent on one side end of the first basin portion 71. The first tab branch 73 is bent at a right angle on the side end of the first basin portion 71 and is parallel to a wide front surface of the electrode assembly 10.

The current collecting member 70 includes connection plate 72 that extends downwardly toward the bottom of the case 34 and below the first basin portion 71 as well as a second basin portion 76 protruding further outwardly than the side end of the connection plate 72 below the connection plate 72. The second tab branch 74 and the third tab branch 75 are on side ends of the second basin portion 76. The second tab branch 74 and the third tab branch 75 are bent at a right angle to be parallel to a wide front surface of one of the electrode assemblies 10 at the second basin portion 76 and extend toward the bottom of the electrode assembly 10 from the second basin portion 76.

The three electrode assemblies 10 overlap with or are stacked against each other; and a separated space is formed between the positive uncoated regions 11a. Thus, two separated spaces are formed in this embodiment. The first tab branch 73 and the second tab branch 74 are inserted into one separated space and the third tab branch 75 is joined on an outer surface of the positive uncoated region 11 a of the electrode assembly 10 on an outside of the stack.

In this embodiment, a second portion 62' of the lower insulating member 60 has a second width L2'. Thus, width-direction ends of the second portion 62' lie in a plane between an inner surface of the case 34 and centers C1 and C2 of top surfaces of outermost electrode assemblies 10 of the stack, e.g., surfaces facing the second portion.

In this embodiment, the width-direction ends of the second portion 62' lie in a plane between side surfaces 10a and 10'a of the outermost electrode assemblies 10 and the centers C1 and C2 of curved, e.g., top, surfaces 10b and 10'b of the outermost electrode assemblies 10. In this embodiment, the second width L2' is equal to the width of the cap plate 30. In other embodiments, the second width L2' may have a different length.

The second width L2' of the second portion 62' is larger than a first width L1' (not shown) of the first portion 61.

An edge of a surface of the second portion 62' facing the electrode assemblies 10 may include an inclined surface (not shown). For example, the inclined surface of the edge of the second portion 62' may include a rounded-inclined surface.

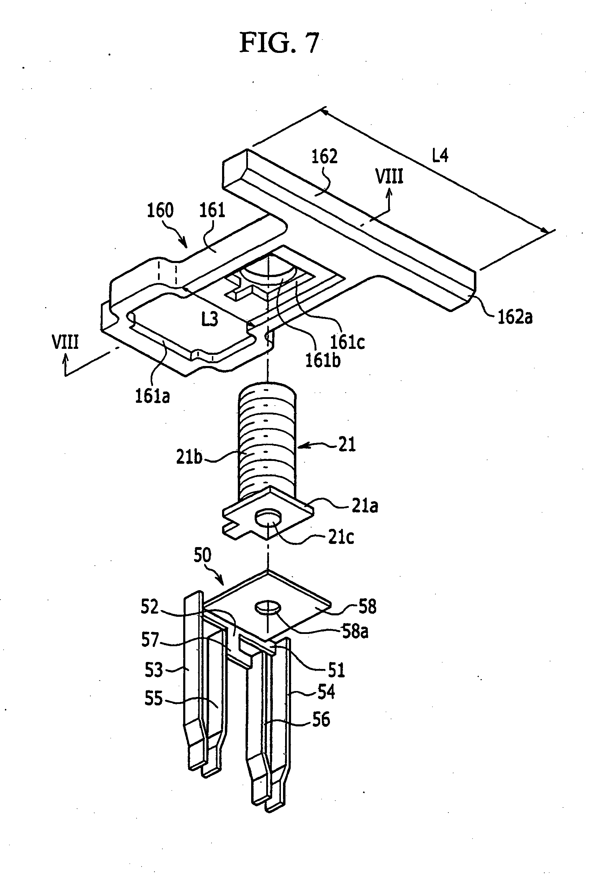

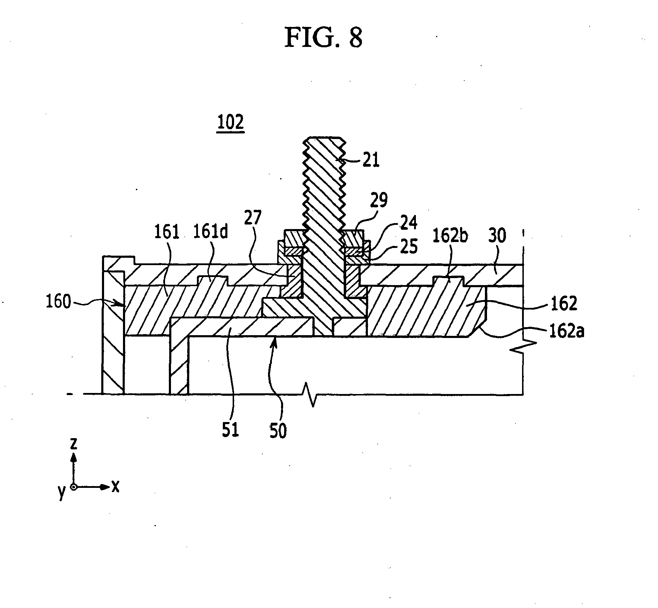

FIG. 7 illustrates a partial exploded perspective view of a rechargeable battery according to another embodiment. FIG. 8 is a cross-sectional view taken along line VIII-VIII of FIG. 7.

Referring to FIGS. 7 and 8, the rechargeable battery 102 according to the present embodiment has the same structure as the rechargeable battery 100 according to the previous embodiment except for a lower insulating member 160. Therefore, repeated descriptions of the same structure will be omitted. Further, widths L3 and L4 of the lower insulating member 160 according to the present embodiment are equal to the widths L1 and L2 described with respect to the previous embodiment. Therefore, a repeated description of the widths L3 and L3 will be omitted.

Referring to FIGS. 7 and 8, the lower insulating member 160 includes a first portion 161 fixed to the first electrode terminal 21. The lower insulating member 160 has the third width L3 in the direction parallel to the surface of the cap plate 30. Further, the lower insulating member 160 includes a second portion 162 that extends from the first portion 161 and has the fourth width L4 in the direction parallel to the cap plate 30.

Further, as shown in FIG. 7, the lower insulating member 160 includes a terminal hole 161 b at a portion, e.g., right side, thereof, a flange groove 161 c to which the terminal flange 21 a may be fixed, and a junction groove 161 a into which the first current collecting member 50 may be inserted.

As illustrated in FIG. 8, a first fixation protrusion 161d and a second fixation protrusion 162b for preventing the lower insulating member 160 from being rotated are on surfaces of the first portion 161 and the second portion 162, respectively, facing the cap plate 30 and may be coupled to fixation grooves in the cap plate 30.

An edge of the surface of the second portion 162 facing the electrode assembly 10 may include an inclined surface. In this embodiment, as illustrated in FIGS. 7 and 8, the inclined surface of the edge of the second portion 162 may include a flat-inclined surface 162a.

The second portion 162 may contact all of the plurality of stacked electrode assemblies 10 during a test (e.g., a drop test) for measuring the durability of the rechargeable battery 102 and/or when the electrode assembly 10 is expanded by gas generated from the inside thereof by charging/discharging. Accordingly, deformation of the electrode assembly 10 may be minimized by reducing stress applied to each electrode assembly 10. In addition, even if the electrode assembly 10 contacts the flat-inclined surface of the second portion 162, damage to the electrode assembly 10 may be prevented.

The second portion 162 may have an insulation function to prevent current flow between the cap plate 30 and the electrode assembly 10 and may prevent the electrode assembly 10 from being deformed by absorbing external impact applied to the electrode assembly 10 in a part corresponding to the second portion 162.

By way of review, in a rechargeable battery, an electrode assembly wound in a jelly roll shape (or other shape) may be deformed by external impact or an increase in internal pressure, which may be caused by generation of gas in the rechargeable battery while the rechargeable battery is repeatedly charged and discharged. The deformed electrode assembly may be prevented from contacting a case by an insulating member that performs an insulation function between the case and the electrode assembly of the rechargeable battery.

According to the some embodiments of the invention, even if some of the deformed electrode assemblies contact the insulating member, a concentration of stress on electrode assemblies that do not contact the insulating member may be prevented.

According to some embodiments, even if the electrode assembly contacts an edge portion of the insulating member, damage to the electrode assembly may be prevented.

Thus, some embodiments of the invention provide a rechargeable battery including an insulating member capable of preventing stress from concentrating on electrode assemblies deformed due to external impact or an increase in internal pressure and preventing the electrode assemblies from being damaged.

Embodiments of the invention provide a rechargeable battery having an improved structure of a lower insulating member.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A rechargeable battery, comprising:
a plurality of electrode assemblies;
a case (34) accommodating the plurality of electrode assemblies (10), the case having an opening;
a cap assembly including a cap plate (30) coupled to the opening to seal the case;
one or more electrode terminals (21, 22) electrically connected to the electrode assemblies; and
a lower insulating member (60) adjacent one or more electrode terminals and installed in the case, wherein:
the lower insulating member includes:
a first portion (61) adjacent an electrode terminal, the first portion having a first width (L1) in a direction parallel to the cap plate and being fixed to the electrode terminal, and
a second portion (62) extending from one end of the first portion, the second portion having a second width (L2) in the direction parallel to the cap plate and perpendicular to the direction of extension of the first portion, and
a width-direction end of the second portion lies in a plane between an inner surface of the case and centre (C1, C2) of a top surface of an outermost electrode assembly among the electrode assemblies, the top surface facing the second portion, wherein the second width of the second portion is larger than the first width.

2. A rechargeable battery according to claim 1, wherein the lower insulating member is coupled to more than one electrode terminals.

3. A rechargeable battery according to any one of claims 1 to 2, wherein the top surface of the electrode assembly facing the second portion of the lower insulating member includes a curved portion.

4. A rechargeable battery according to any one of claims 1 to 3, wherein the second width of the second portion is substantially equal to a width of the cap plate, optionally wherein the second width of the second portion is in the range of 75% to 100% of the width of the cap plate.

5. A rechargeable battery according to any one of claims 1 to 4, wherein the second portion includes an edge facing the electrode assembly, the edge including an inclined surface.

6. A rechargeable battery according to claim 5, wherein: the inclined surface of the edge of the second portion is a rounded-inclined surface or a flat-inclined surface.

7. A rechargeable battery according to any one of claims 1 to 6, wherein the lower insulating member includes:
a first fixation protrusion on a surface of the first portion, the first fixation protrusion facing the cap assembly; and
a second fixation protrusion on a surface of the second portion, the second fixation protrusion facing the cap assembly.

8. A rechargeable battery according to any one of claims 1 to 7, further comprising a protection member covering a portion of an outside of the electrode assembly, said portion of the outside of the electrode assembly corresponding to the lower insulating member.

9. A rechargeable battery according to claim 8, wherein the protection member is a tape covering said portion of the outside of the electrode assembly.

10. A rechargeable battery according to any one of claims 1 to 9, wherein the lower insulating member comprises an elastic material.

11. A rechargeable battery according to any one of claims 1 to 10, wherein the one or more electrode terminals are electrically connected to the electrode assemblies through an electrode current collecting member.

12. A rechargeable battery according to claim 11, wherein the electrode current collecting member includes a terminal junction portion, the terminal junction portion being electrically connected to the one or more electrode terminals.

13. A rechargeable battery according to claim 12, wherein the electrode current collecting member includes at least one tab branch, the at least one tab branch being electrically connected to at least one of the plurality of electrode assemblies and the terminal junction portion.

## Patentansprüche

1. Wiederaufladbare Batterie, umfassend:
eine Vielzahl von Elektrodenanordnungen;
ein die Vielzahl von Elektrodenanordnungen (10) aufnehmendes Gehäuse (34), wobei das Gehäuse eine Öffnung enthält;
eine Abdeckanordnung mit einer Abdeckplatte (30), die zum Verschließen des Gehäuses mit der Öffnung zusammengefügt ist;
eine oder mehrere Elektrodenklemmen (21, 22), die elektrisch mit den Elektrodenanordnungen verbunden sind; und
ein unteres Isolierelement (60), das an eine oder mehrere Elektrodenklemmen angrenzt und in dem Gehäuse angebracht ist, wobei:
das untere Isolierelement aufweist:
einen ersten an einer Elektrodenklemme angrenzenden Abschnitt (61), wobei der erste Abschnitt eine erste Breite (L1) in einer Richtung parallel zu der Abdeckplatte aufweist und an der Elektrodenklemme befestigt ist, und
einen sich von einem Ende des ersten Abschnitts aus erstreckenden zweiten Abschnitt (62), wobei der zweite Abschnitt eine zweite Breite (L2) in der Richtung parallel zur Abdeckplatte und senkrecht zur der Richtung der Erstreckung des ersten Abschnitts aufweist, und
ein Breitenrichtungsende des zweiten Abschnitts in einer Ebene zwischen einer Innenfläche des Gehäuses und Mitte (C1, C2) einer oberen Fläche einer unter den Elektrodenanordnungen äußersten Elektrodenanordnung liegt, wobei die obere Fläche dem zweiten Abschnitt zugewandt ist, wobei die zweite Breite des zweiten Abschnitts größer ist als die erste Breite.

2. Wiederaufladbare Batterie nach Anspruch 1, wobei das untere Isolierelement mit mehr als einer Elektrodenklemme verbunden ist.

3. Wiederaufladbare Batterie nach einem der Ansprüche 1 bis 2, wobei die obere Fläche der dem zweiten Abschnitt des unteren Isolierelements zugewandten Elektrodenanordnung einen gekrümmten Abschnitt aufweist.

4. Wiederaufladbare Batterie nach einem der Ansprüche 1 bis 3, wobei die zweite Breite des zweiten Abschnitts im Wesentlichen gleich einer Breite der Abdeckplatte ist, wahlweise wobei die zweite Breite des zweiten Abschnitts im Bereich von 75% bis 100% der Breite der Abdeckplatte liegt.

5. Wiederaufladbare Batterie nach einem der Ansprüche 1 bis 4, wobei der zweite Abschnitt eine der Elektrodenanordnung zugewandte Kante aufweist, wobei die Kante eine Schrägfläche aufweist.

6. Wiederaufladbare Batterie nach Anspruch 5, wobei die Schrägfläche der Kante des zweiten Abschnitts eine abgerundete Schrägfläche oder eine flache Schrägfläche ist.

7. Wiederaufladbare Batterie nach einem der Ansprüche 1 bis 6, wobei das untere Isolierelement aufweist:
einen ersten Befestigungsvorsprung an einer Fläche des ersten Abschnitts, wobei der erste Befestigungsvorsprung der Abdeckanordnung zugewandt ist; und
einen zweiten Befestigungsvorsprung an einer Fläche des zweiten Abschnitts, wobei der zweite Befestigungsvorsprung der Abdeckanordnung zugewandt ist.

8. Wiederaufladbare Batterie nach einem der Ansprüche 1 bis 7, ferner umfassend ein einen Abschnitt einer Außenseite der Elektrodenanordnung bedeckendes Schutzelement, wobei der Abschnitt der Außenseite der Elektrodenanordnung dem unteren Isolierelement entspricht.

9. Wiederaufladbare Batterie nach Anspruch 8, wobei das Schutzelement ein den Abschnitt der Außenseite der Elektrodenanordnung bedeckendes Band ist.

10. Wiederaufladbare Batterie nach einem der Ansprüche 1 bis 9, wobei das untere Isolierelement ein elastisches Material umfasst.

11. Wiederaufladbare Batterie nach einem der Ansprüche 1 bis 10, wobei die eine oder mehreren Elektrodenklemmen elektrisch mit den Elektrodenanordnungen über ein Elektrodenstromsammelelement verbunden sind.

12. Wiederaufladbare Batterie nach Anspruch 11, wobei das Elektrodenstromsammelelement einen Klemmenverbindungsabschnitt aufweist, wobei der Klemmenverbindungsabschnitt elektrisch mit der einen oder mehreren Elektrodenklemmen verbunden ist.

13. Wiederaufladbare Batterie nach Anspruch 12, wobei das Elektrodenstromsammelelement mindestens einen Anschlusszweig aufweist, wobei der mindestens eine Anschlusszweig elektrisch mit mindestens einer der Vielzahl von Elektrodenanordnungen und dem Klemmenverbindungsabschnitt verbunden ist.

## Revendications

1. Batterie rechargeable, comprenant :
une pluralité d'ensembles d'électrode ;
un boîtier (34) logeant la pluralité d'ensembles d'électrode (10), le boîtier ayant une ouverture ;
un ensemble de capuchon comprenant une plaque de capuchon (30) couplée à l'ouverture pour fermer hermétiquement le boîtier ;
une ou plusieurs bornes d'électrode (21, 22) raccordées électriquement aux ensembles d'électrode ; et
un élément isolant inférieur (60) adjacent aux une ou plusieurs bornes d'électrode et installé dans le boîtier, dans laquelle :
l'élément isolant inférieur comprend :
une première partie (61) adjacente à une borne d'électrode, la première partie ayant une première largeur (L1) dans une direction parallèle à la plaque de capuchon et étant fixée sur la borne d'électrode, et
une seconde partie (62) s'étendant à partir d'une extrémité de la première partie, la seconde partie ayant une seconde largeur (L2) dans la direction parallèle à la plaque de capuchon et perpendiculaire à la direction d'extension de la première partie, et
une extrémité dans le sens de la largeur de la seconde partie se trouve dans un plan entre une surface interne du boîtier et le centre (C1, C2) d'une surface supérieure de l'ensemble d'électrode situé le plus à l'extérieur parmi les ensembles d'électrode, la surface supérieure faisant face à la seconde partie, la seconde largeur de la seconde partie étant plus grande que la première largeur.

2. Batterie rechargeable selon la revendication 1, dans laquelle l'élément isolant inférieur est couplé à plus d'une borne d'électrode.

3. Batterie rechargeable selon l'une quelconque des revendications 1 et 2, dans laquelle la surface supérieure de l'ensemble d'électrode faisant face à la seconde partie de l'élément isolant inférieur comprend une partie incurvée.

4. Batterie rechargeable selon l'une quelconque des revendications 1 à 3, dans laquelle la seconde largeur de la seconde partie est sensiblement égale à une largeur de la plaque de capuchon, facultativement dans laquelle la seconde largeur de la seconde partie est dans la plage de 75 % à 100 % de la largeur de la plaque de capuchon.

5. Batterie rechargeable selon l'une quelconque des revendications 1 à 4, dans laquelle la seconde partie comprend un bord faisant face à l'ensemble d'électrode, le bord comprenant une surface inclinée.

6. Batterie rechargeable selon la revendication 5, dans laquelle : la surface inclinée du bord de la seconde partie est une surface inclinée arrondie ou une surface inclinée plate.

7. Batterie rechargeable selon l'une quelconque des revendications 1 à 6, dans laquelle l'élément isolant inférieur comprend :
une première saillie de fixation sur une surface de la première partie, la première saillie de fixation faisant face à l'ensemble de capuchon ; et
une seconde saillie de fixation sur une surface de la seconde partie, la seconde saillie de fixation faisant face à l'ensemble de capuchon.

8. Batterie rechargeable selon l'une quelconque des revendications 1 à 7, comprenant en outre un élément de protection recouvrant une partie d'un extérieur de l'ensemble d'électrode, ladite partie de l'extérieur de l'ensemble d'électrode correspondant à l'élément isolant inférieur.

9. Batterie rechargeable selon la revendication 8, dans laquelle l'élément de protection est une bande recouvrant ladite partie de l'extérieur de l'ensemble d'électrode.

10. Batterie rechargeable selon l'une quelconque des revendications 1 à 9, dans laquelle l'élément isolant inférieur comprend un matériau élastique.

11. Batterie rechargeable selon l'une quelconque des revendications 1 à 10, dans laquelle les une ou plusieurs bornes d'électrode sont électriquement raccordées aux ensembles d'électrode par le biais d'un élément de collecte de courant d'électrode.

12. Batterie rechargeable selon la revendication 11, dans laquelle l'élément de collecte de courant d'électrode comprend une partie de jonction de borne, la partie de jonction de borne étant électriquement raccordée aux une ou plusieurs bornes d'électrode.

13. Batterie rechargeable selon la revendication 12, dans laquelle l'élément de collecte de courant d'électrode comprend au moins une bifurcation de languette, l'au moins une bifurcation de languette étant électriquement raccordée à au moins l'un parmi la pluralité d'ensembles d'électrode et la partie de jonction de borne.
